(19) **Europäisches Patentamt**
**European Patent Office**
**Office européen des brevets**

(11) **EP 4 524 519 A1**

(12) **EUROPÄISCHE PATENTANMELDUNG**

(43) Veröffentlichungstag:
**19.03.2025 Patentblatt 2025/12**

(21) Anmeldenummer: **24198522.5**

(22) Anmeldetag: **04.09.2024**

(51) Internationale Patentklassifikation (IPC):
*G01F 1/84* (2006.01)

(52) Gemeinsame Patentklassifikation (CPC):
**G01F 1/8427; G01F 1/8431; G01F 1/8472; G01F 1/8495**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **14.09.2023 DE 102023124909**

(71) Anmelder: **duotec GmbH**
**58553 Halver (DE)**

(72) Erfinder: **Weber, Werner**
**58553 Halver (DE)**

(74) Vertreter: **Lippert Stachow Patentanwälte**
**Rechtsanwälte**
**Partnerschaft mbB**
**Frankenforster Strasse 135-137**
**51427 Bergisch Gladbach (DE)**

(54) **MASSESTROM-MESSEINRICHTUNG**

(57) Die Erfindung betrifft eine Messeinrichtung zum Ermitteln eines Massestroms eines durch ein Rohr strömenden Fluidflusses, die Messeinrichtung umfassend das Rohr und einen mit dem Rohr gekoppelten Schwingungsgeber, der dazu ausgebildet ist, das Rohr zum Ausführen einer Schwingung anzuregen und dadurch das Rohr in einen schwingenden Zustand zu versetzen, wobei das Rohr zwei voneinander beabstandete Messabschnitte aufweist, die durch einen Zwischenab- schnitt des Rohrs miteinander verbunden sind, wobei in dem schwingenden Zustand die Messabschnitte gemeinsam mit dem Zwischenabschnitt eine U-Form ausbilden, indem die Messabschnitte jeweils einen U-Schenkel und der Zwischenabschnitt einen U-Boden der U-Form ausbilden, wobei insbesondere der Schwingungsgeber an dem Zwischenabschnitt des Rohrs angekoppelt ist.

**Fig. 1a**

**Beschreibung**

Die Erfindung betrifft eine Messeinrichtung zum Ermitteln eines Massestroms eines durch ein Rohr strömenden Fluidflusses gemäß dem Oberbegriff von Anspruch 1 sowie ein Messsystem umfassend eine solche Messeinrichtung und ein Verfahren zum Ermitteln eines Massestroms eines Fluidflusses durch ein Rohr.

Gattungsgemäße Messeinrichtungen, auf denen die vorliegende Erfindung basiert, beruhen auf dem Coriolisprinzip. Solche Messeinrichtungen weisen ein Rohr auf, durch das ein Fluid geleitet wird, wobei durch die Messeinrichtungen ein Massestrom des Fluids, während es durch das Rohr fließt, ermittelt wird. Hierzu wird das Rohr durch einen Schwingungsgeber dazu angeregt, eine Schwingung durchzuführen. Während es die Schwingung durchführt, weist das Rohr eine U-förmige Form auf, d. h. dass das Rohr zwei Rohrabschnitte aufweist, die durch einen dritten Rohrabschnitt miteinander verbunden sind, wobei das Rohr in dem dritten Rohrabschnitt gekrümmt ist, insbesondere um 180° gekrümmt ist. Aufgrund der U-Form strömt das Fluid mit Bezug auf eine Raumrichtung in den beiden Rohrabschnitten in eine jeweils unterschiedliche Richtung. Zum Messen des Massestroms wird das Rohr in eine solche Schwingung versetzt, dass durch die Schwingung das in einer Bewegungsrichtung fließende Fluid in einem ersten Rohrabschnitt beschleunigt wird, in einem zweiten Rohrabschnitt jedoch gebremst wird. Dies kann beispielsweise mittels einer Verformung des Rohrs und/oder mittels einer Drehbewegung des Rohrs um eine Achse, die senkrecht auf der genannten Raumrichtung steht, erreicht werden, wobei der Schwingungsgeber die entsprechende Verformung bzw. Bewegung auf das Rohr als Schwingung anregt. Da das Fluid in den beiden Rohrabschnitten aufgrund des Fluidflusses und damit aufgrund seiner sich bewegenden Masse jeweils eine Beschleunigung mit jeweils anderer Richtung durch die auf das Rohr aufgeprägte Schwingung erfährt, verformt sich das Rohr in Abhängigkeit von dem Massestrom. Der Massestrom gibt an, welche Masse pro Zeiteinheit durch das Rohr strömt, und bei bekannter Dichte lässt sich z.B. aus dem Massestrom der Volumenstrom, d.h. Volumen pro Zeit, des Fluidflusses ermitteln. Auch hängt die Verformung selbstverständlich von der aufgeprägten Schwingung ab. Beispielsweise kann bei Kenntnis der Dichte eines Fluids über den ermittelten Messwert einer Verformung bei Kenntnis der aufgeprägten Schwingungsfrequenz und Schwingungsamplitude ein Massestrom ermittelt werden, die den Volumenstrom, d. h. Volumen pro Zeit, des Fluidflusses definiert.

Bei bekannten Messeinrichtungen, die auf dem Coriolisprinzip basieren, ist die von dem Schwingungsgeber aufgeprägte Schwingungsamplitude und Schwingungsfrequenz sowie die Präzision der Ermittlung der erfolgten Verformung des Rohrs entscheidend für die Präzision der Ermittlung des Massestroms des Fluidflusses durch das Rohr. Um eine möglichst hohe Auflösung, d. h. eine Unterscheidung zwischen nah beieinanderliegenden Messeströme, zu gewährleisten, werden üblicherweise Rohre mit erheblichen Dimensionen verwendet, wobei an dem Rohr mehrere Bewegungssensoren befestigt werden, deren Bewegung aufgezeichnet wird, um eine Verformung des Rohrs zu quantifizieren und hieraus den Massestrom zu ermitteln. Im Stand der Technik ist beispielsweise bekannt, zum Gewährleisten einer möglichst hohen Auflösung bei der Ermittlung des Massestroms Magnetelemente an dem Rohr zu befestigen, deren Positionen durch Magnetsensoren erfasst werden, und die Dimension des Rohrs und die aufgeprägte Schwingungsamplitude so auszugestalten, dass mit den Magnetsensoren eine Verformung des Rohrs so präzise ermittelt werden kann, dass der Massestrom des durch das Rohr fließenden Fluidflusses mit hinreichender Genauigkeit ermittelt werden kann. Solche herkömmlichen Messeinrichtungen benötigen jedoch zur Gewährleistung einer hinreichend guten Auflösung einen erheblichen Energiebedarf zur Erzeugung der Schwingung mit ausreichender Schwingungsamplitude und sind darüber hinaus nur mit erheblichen Herstellkosten herstellbar, da zum einen ein Rohr mit ausreichend großen Dimensionen bereitgestellt werden muss und zum anderen die Magnete und korrespondierenden Magnetsensoren aufwendig so ausgestaltet werden müssen, dass bereits eine geringe Verformung des Rohrs präzise erfasst werden kann.

Der vorliegenden Erfindung liegt die Aufgabe zugrunde, eine Messeinrichtung, ein Messsystem und/oder ein Verfahren zum Ermitteln eines Massestroms eines Fluidflusses durch ein Rohr bereitzustellen, die bzw. das zumindest einen Nachteil bekannter Messeinrichtungen bzw. Messsysteme bzw. Verfahren zumindest teilweise behebt.

Als eine Lösung der der vorliegenden Erfindung zugrunde liegenden Aufgabe schlägt die Erfindung eine Messeinrichtung mit den Merkmalen gemäß Anspruch 1 vor. Die Messeinrichtung ist zum Ermitteln eines Massestroms eines durch ein Rohr strömenden Fluidflusses ausgebildet. Im einfachsten Fall kann durch die Messeinrichtung ermittelbar sein, ob ein Fluidfluss durch das Rohr strömt, in bevorzugten Ausführungsformen ist der Massestrom mit hoher Auflösung ermittelbar. Je nach gewähltem Rohrdurchmesser kann beispielsweise eine Auflösung 1 g/s bei einem Wert des Massestrom von 1 kg/s möglich sein. Die Messeinrichtung umfasst ein Rohr und einen mit dem Rohr gekoppelten Schwingungsgeber, der dazu ausgebildet ist, das Rohr zum Ausführen einer Schwingung anzuregen und dadurch das Rohr in einen schwingenden Zustand zu versetzen. Der Schwingungsgeber kann beispielsweise ein elektromagnetischer oder elektromechanischer Schwingungsgeber sein. Ein elektromagnetischer Schwingungsgeber kann beispielsweise dergestalt an das Rohr angekoppelt sein, dass er ein oszillierendes Magnetfeld erzeugt und hierdurch einen magnetischen Abschnitt des Rohrs zu einer mechanischen Schwingung anregt. Ein elektromechanischer Schwingungsgeber kann beispielsweise einen Elektromotor umfassen, der durch eine mechanische Kopplung an das Rohr angekoppelt ist. Allgemein bevorzugt ist der Schwingungsgeber nur an einen ausgewählten Bereich des Rohrs angekoppelt, sodass er nur innerhalb des ausgewählten Bereichs des Rohrs eine Kraft auf das Rohr ausübt, durch die das Rohr in Schwingung versetzt wird. Der Schwingungsgeber ist dazu ausgebildet, das Rohr ausgehend von einem Ruhezustand, in dem das Rohr bewegungslos ist, in den schwingenden Zustand zu versetzen. Bevorzugt ist eine Regelung des Schwingungsgebers vorgesehen, mit der eine Schwingungsfrequenz, mit der der Schwingungsgeber das Rohr zum Ausführen der Schwingung anregt, geregelt wird, beispielsweise in Abhängigkeit von einer ermittelten Amplitude der Bewegung des Rohrs während der Schwingung, wobei insbesondere die Regelung des Schwingungsgebers dazu ausgebildet ist, das Rohr dergestalt zur Schwingung anzuregen, dass es mit seiner Resonanzfrequenz schwingt. Die Amplitude kann beispielsweise mittels der nachstehend erläuterten Dehnungsmesssensoren ermittelt werden, so dass die Messsignale der Dehnungsmesssensoren zur Regelung der Schwingungsfrequenz verwendet werden, mit der der Schwingungsgeber das Rohr zur Schwingung anregt. Das Rohr weist zwei voneinander beabstandete Messabschnitte auf, die durch einen Zwischenabschnitt des Rohrs miteinander verbunden sind, wobei in dem schwingenden Zustand des Rohrs die Messabschnitte gemeinsam mit dem Zwischenabschnitt eine U-Form bilden, indem die Messabschnitte jeweils einen U-Schenkel und der Zwischenabschnitt einen U-Boden der U-Form ausbilden. In einer Ausführungsform bilden die Messabschnitte gemeinsam mit dem Zwischenabschnitt bereits in dem Ruhezustand des Rohrs die U-Form aus, in einer anderen Ausführungsform entsteht die U-Form erst im schwingenden Zustand. Die U-Form zeichnet sich dadurch aus, dass ein erster der Messeabschnitte und ein zweiter der Messeabschnitte so zueinander angeordnet und über den Zwischenabschnitt miteinander verbunden sind, dass ein Fluid, das das Rohr und somit die Messabschnitte und den Zwischenabschnitt durchströmt, sich mit Bezug auf eine Raumrichtung in dem ersten Messabschnitt in positive Richtung bewegt und in dem zweiten Messabschnitt in negative Richtung bewegt, sodass, wie oben zu gattungsgemäßen, auf dem Coriolisprinzip beruhenden Messeinrichtungen erläutert, aufgrund der mit Bezug auf die Raumrichtung entgegengesetzten Strömungsrichtung in den beiden Messabschnitten durch die Schwingung eine Verformung des Rohrs bzw. der U-Form erfolgt, wenn ein Fluid durch das Rohr und somit durch die U-Form strömt. Die Messabschnitte und der Zwischenabschnitt sind somit jeweils Rohrabschnitte des Rohrs. In einer Ausführungsform verlaufen die Messabschnitte zumindest abschnittsweise parallel, in einer anderen Ausführungsform sind die Messabschnitte zueinander stets abgewinkelt. Der Begriff "U-Form" bezeichnet somit eine Form, die nach Art eines U gestaltet ist, wobei nicht zwischen einem U und einem V unterschieden wird, sondern die wesentliche Eigenschaft der U-Form darin besteht, das Fluid in den beiden Messabschnitten jedenfalls mit Bezug auf eine Richtungskomponente in eine jeweils entgegengesetzte Richtung zu zwingen, nur in vorteilhaften Ausführungsformen verlaufen die Messabschnitte zumindest abschnittsweise parallel. Allgemein bevorzugt ist der Schwingungsgeber an den Zwischenabschnitt des Rohrs angekoppelt, insbesondere ausschließlich innerhalb des Zwischenabschnitts an das Rohr angekoppelt. Somit übt der Schwingungsgeber an dem Zwischenabschnitt, insbesondere ausschließlich an dem Zwischenabschnitt, zum Anregen des Rohrs zur Durchführung der Schwingung eine Kraft auf das Rohr aus. Durch die Ankopplung des Schwingungsgebers an den Zwischenabschnitt kann bevorzugt mit möglichst geringer Schwingungsamplitude des Schwingungsgebers und somit mit möglichst geringem Energieaufwand eine möglichst große Verformung des Rohrs in seinen Messabschnitten bei einer erfindungsgemäßen Messeinrichtung unter Erzeugung von möglichst großen, unten näher erläuterten Messsignalen.

Erfindungsgemäß ist an jedem der Messabschnitte des Rohrs jeweils ein Dehnungsmesssensor angeordnet. Der jeweilige Dehnungsmesssensor kann unmittelbar an dem jeweiligen Messabschnitt angeordnet sein oder an einem mit dem jeweiligen Messabschnitt verbundenen Körper angeordnet sein. Der jeweilige Dehnungsmesssensor ist zum Ausgeben eines Messsignals ausgebildet, das eine Dehnung des jeweiligen Messabschnitts des Rohrs charakterisiert, an dem er angeordnet ist. Dabei definiert das Messsignal eine Dehnung, die der Dehnungsmesssensor aufgrund der Dehnung des Untergrunds erfährt, an dem er angeordnet ist. Bei einer Anordnung des Dehnungsmesssensors unmittelbar an dem Messabschnitt erfährt der Dehnungsmesssensor direkt die Dehnung, die der Messabschnitt erfährt. Bei der Anordnung des Dehnungsmesssensors an einem Körper, der mit dem jeweiligen Messabschnitt verbunden ist, erfährt der Dehnungsmesssensor direkt die Dehnung, die der Körper erfährt. Beispielsweise kann der Körper eine Zwischenschicht zwischen Messabschnitt des Rohrs und dem Dehnungsmesssensor darstellen, so dass der Dehnungsmesssensor die Dehnung des Messabschnitts des Rohrs mittelbar über die Zwischenschicht erfährt. Dabei kann die Zwischenschicht geometrisch so ausgestaltet sein, dass sie eine Dehnung des Messabschnitts übersetzt, beispielsweise, indem die Zwischenschicht einen verdünnten Zwischenabschnitt aufweist, an dem der Dehnungsmesssensor angeordnet ist und dessen Dehnung er erfasst, wobei dieser Zwischenabschnitt sich stärker dehnt als der Messabschnitt des Rohrs, da er über steifere Randabschnitte der Zwischenschicht mit dem Messabschnitt verbunden ist. Beispielsweise können die jeweiligen Körper, an denen die Dehnungsmesssensoren jeweils angeordnet sind, gemeinsam durch einen unten näher erläuterten Montagekörper ausgebildet sein, an dem die Messabschnitte des Rohrs befestigt sind. Bei einer Dehnung eines jeden der Messabschnitte verformt sich auch ein solcher Montagekörper innerhalb seines Abschnitts, an dem der jeweilige Messabschnitt befestigt ist bzw. mit dem er verbunden ist, so dass auch bei einer Anordnung des jeweiligen Dehnungsmesssensors an einem solchen Abschnitt des Montagekörpers durch diesen die im jeweiligen Messabschnitt erfolgende Dehnung erfasst wird. Dabei ist jedem der Dehnungsmesssensoren jeweils genau ein Abschnitt des Montagekörpers zugeordnet, und diese Abschnitte sind voneinander dergestalt beabstandet, dass der jeweilige Abschnitt nur eine solche Dehnung erfährt, die von dem an ihm angeordneten Messabschnitt resultiert, so dass er von einer Dehnung des anderen Messabschnitts unbeeinflusst bleibt. Hierzu kann der Montagekörper zweckmäßig ausgebildet sein, z.B. hinreichend elastisch in seinem jeweiligen Abschnitt, an dem der jeweilige Messkörper befestigt ist, und/oder hinreichend starr in seinem Körperabschnitt, der die Abschnitte verbindet, an denen jeweils einer der Messkörper befestigt ist, und/oder mit einer hinreichend großen Erstreckung zwischen den genannten Abschnitten. In einer Ausführungsform sind die Messsensoren jeweils zum aktiven Ausgeben eines Messsignals ausgebildet, in einer Ausführungsform sind die Dehnungsmesssensoren jeweils zum passiven Ausgeben eines Messsignals ausgebildet, sodass sie das jeweilige Messsignal bereitstellen und über eine Ausleseeinheit ausgelesen werden können. Der Schwingungsgeber, das Rohr und die Dehnungsmesssensoren sind dergestalt zueinander korrespondierend ausgebildet, dass in dem schwingenden Zustand des Rohres, d. h. während das Rohr die Schwingung ausführt, das von den Dehnungsmesssensoren ausgegebene Messsignal jeweils eine von der Schwingung abhängige Schwingungsfrequenz aufweist und dass mittels eines im schwingenden Zustand des Rohrs erfolgenden Abgleichs, d.h. Vergleichs, der Messsignale die Fließgeschwindigkeit des Fluidflusses durch das Rohr quantifizierbar ist. Durch einen Abgleich der jeweils schwingenden Messsignale von erstem und zweitem Dehnungsmesssensor, wobei der erste Dehnungsmesssensor am ersten Messabschnitt des Rohrs angeordnet ist der zweite Dehnungsmesssensor am zweiten Messabschnitt des Rohrs angeordnet ist, kann somit eine Information über den Massestrom gewonnen werden. Ein solcher Abgleich kann beispielsweise dergestalt vorgesehen sein, dass in funktionaler Abhängigkeit von beiden Messsignalen als Eingabewerte einer Funktion, insbesondere als einzige Eingabewerte einer Funktion, der Massestrom ermittelt werden kann. Die Eingabewerte der Funktion, aufgrund derer alleine bei ansonsten konstanten Parametern der Messung, etwa der aufgeprägten Schwingung, der Massestrom durch die Funktion ermittelbar ist. Beispielsweise kann der Abgleich in einer Differenzbildung zwischen den Messsignalen bestehen. In einer besonders bevorzugten Ausführungsform ist der Massestrom mittels einer im schwingenden Zustand des Rohrs durch den Fluidfluss erzeugten Phasenverschiebung zwischen den Messsignalen der beiden Dehnungsmesssensoren quantifizierbar. Somit ist die Phasenverschiebung der Eingabewert einer Funktion, mit der der Massestrom ermittelt werden kann. Dabei haben die Erfinder erkannt, dass aufgrund des Anregens des Rohrs durch den Schwingungsgeber auch der Betrag der Dehnung in den beiden Messabschnitten sich analog zur Schwingung schwingend ändert, sodass die beiden aus den beiden Dehnungsmesssensoren ausgelesenen Messsignale ebenfalls schwingende Messsignale sind, deren Frequenz von der Frequenz der Schwingung des Rohrs im schwingenden Zustand abhängt. Die Erfinder haben ferner erkannt, dass durch den Abgleich, insbesondere durch die Ermittlung der Phasenverschiebung zwischen den Messsignalen der an den beiden Messabschnitten angeordneten Dehnungsmesssensoren, auf sehr einfache Weise mit einer hohen Präzision bei einer nur geringen Verformung des Rohrs der Massestrom quantifiziert werden kann. Besonders bevorzugt kann darüber hinaus anhand der Messsignale der an den beiden Messabschnitten angeordneten Dehnungsmesssensoren durch Ermittlung einer frequenzabhängigen Schwingungsamplitude des Rohrs eine Dichte des Fluids bestimmt werden, so dass aus dem Massestrom ein Volumenstrom ermittelbar ist. Anders als bei herkömmlichen, auf dem Coriolisprinzip basierenden Messeinrichtungen muss somit nicht durch Ortsensoren eine Verformung des Rohrs aufwendig erfasst werden, sondern durch einen Abgleich der beiden Dehnungsmesssensoren, die an den beiden Messabschnitten angeordnet sind, kann auf einfache und präzise Weise der Massestrom und insbesondere der Volumenstrom bestimmt werden.

In einer Ausführungsform weist die Messeinrichtung einen Montagekörper auf, an dem die Messabschnitte des Rohrs mit ihren von dem Zwischenabschnitt weg weisenden Enden befestigt sind. Der Montagekörper ist somit am offenen Ende der U-Form, die durch die Messabschnitte und den Zwischenabschnitt gemeinsam gebildet wird, vorgesehen und kann dabei auch diese U-Form schließen. Durch das Vorsehen des Montagekörpers kann jeder der Messabschnitte an seinem vom Zwischenabschnitt weg weisenden Ende an dem Montagekörper fest lokalisiert werden, sodass das Rohr besonders präzise durch den Schwingungsgeber zum Durchführen einer Schwingung anregbar ist. Besonders bevorzugt sind die Dehnungsmesssensoren jeweils näher an dem Montagekörper als an dem Zwischenabschnitt angeordnet, besonders bevorzugt sind die Dehnungsmesssensoren jeweils in unmittelbarer Nähe zum Montagekörper angeordnet. Bei der bevorzugten Ausführungsform erstrecken sich die beiden Rohrabschnitte somit jeweils entlang einer bestimmten Raumrichtung von dem Montagekörper weg und sind mit Bezug auf diese bestimmte Raumrichtung jeweils an einem Ende am Montagekörper angeordnet und am anderen Ende an dem Zwischenabschnitt angeordnet, wobei bevorzugt die Messabschnitte unmittelbar in den Zwischenabschnitt übergehen und somit durch den Zwischenabschnitt direkt miteinander verbunden sind. Besonders bevorzugt sind mit Bezug auf diese bestimmte Raumrichtung die Dehnungsmesssensoren von dem Montagekörper um weniger als ein 1/10, insbesondere weniger als ein 1/50, insbesondere weniger als ein 1/100 der Erstreckungslänge des Rohrs, die das Rohr in dieser bestimmten Raumrichtung ausgehend von dem Montagekörper bis zum vom Montagekörper in dieser Raumrichtung abgewandten Ende des Zwischenabschnitts aufweist, entfernt angeordnet. Die von dem Montagekörper nur sehr wenig oder nicht entfernte Anordnung der Dehnungsmesssensoren hat sich als besonders vorteilhaft herausgestellt, da bei einer Anregung des Rohrs durch den Schwingungsgeber gerade im Bereich des Übergangs des Rohrs zum Montagekörper eine besonders hohe Dehnung auftritt, sodass mit besonders geringer Schwingungsamplitude des Rohrs der Massestrom möglichst präzise aus den Messsignalen der Dehnungsmesssensoren ermittelt werden kann. In einer Ausführungsform sind die Dehnungsmesssensoren jeweils an einem Abschnitt des Montagekörpers angeordnet, an dem jeweils genau einer der Messabschnitte befestigt ist, bevorzugt in unmittelbarer Nähe zum jeweiligen Messabschnitt. Dabei kann mittels der Dehnungsmesssensoren mittelbar über den jeweiligen Abschnitt des Montagekörpers die Dehnung des an dem jeweiligen Abschnitt befestigten Messabschnitts erfasst werden. Die in einem der Messabschnitte erfolgte Dehnung erzeugt bevorzugt ausschließlich in genau dem Abschnitt eine Dehnung des Montagekörpers, an dem der jeweilige Messabschnitt des Rohrs befestigt ist.

In einer Ausführungsform ist der Schwingungsgeber dazu ausgebildet, die Schwingung auf das Rohr als Bewegung des Rohrs relativ zum Montagekörper aufzuprägen. Bei dieser Ausführungsform ist somit vorgesehen, dass der Montagekörper sowohl im Ruhezustand als auch in dem schwingenden Zustand des Rohrs im Wesentlichen bewegungslos ist, jedenfalls dass das Rohr die genannte Schwingung relativ zum Montagekörper ausführt. Besonders bevorzugt sind der Schwingungsgeber, das Rohr und der Montagekörper dergestalt zueinander korrespondierend ausgebildet, dass der Montagekörper während einer Bewegung des Rohrs, die das Rohr aufgrund der von dem Schwingungsgeber auf das Rohr aufgeprägten Schwingung ausführt, sich um weniger als 10 %, insbesondere weniger als 1 %, insbesondere weniger als 0,5 % einer Bewegungstrecke bewegt, entlang derer sich das Rohr während der Schwingung bewegt. Die Bewegungstrecke beschreibt die Strecke, über die hinweg sich das Rohr während der Schwingung bewegt, d. h. entlang derer sich das Rohr zwischen den Amplituden der Schwingung bewegt. Die Bewegungstrecke hat eine Bewegungstreckenlänge. Indem der Montagekörper sich um weniger als 10 %, insbesondere weniger als 1 % der Bewegungstrecke bewegt, d. h. um weniger als 10 %, insbesondere weniger als 1 % der Streckenlänge der Bewegungstrecke, ist sichergestellt, dass mit möglichst geringem Energieaufwand das Rohr selbst eine möglichst große Schwingungsbewegung durchführt und somit eine möglichst große Dehnung mittels der Bewegungsmesssensoren gemessen werden kann, auf Basis derer der Massestrom ermittelt werden kann.

In einer Ausführungsform umfasst die Messeinrichtung ein weiteres Rohr, das zwei voneinander beabstandete weitere Messabschnitte aufweist, die durch einen weiteren Zwischenabschnitt des weiteren Rohrs miteinander verbunden sind, wobei in dem schwingenden Zustand des weiteren Rohrs die weiteren Messabschnitte gemeinsam mit dem weiteren Zwischenabschnitt eine weitere U-Form ausbilden, indem die weiteren Messabschnitte jeweils einen weiteren U-Schenkel und der weitere Zwischenabschnitt einen weiteren U-Boden der weiteren U-Form ausbilden. Die beiden weiteren Messabschnitte sind mit ihren von dem weiteren Zwischenabschnitt weg weisenden Enden an dem Montagekörper befestigt, und das Rohr und das gegenüberliegende Rohr sind als zwei voneinander weg weisenden Seiten des Montagekörpers angeordnet. Der Schwingungsgeber ist mit dem weiteren Rohr dergestalt gekoppelt, dass er das weitere Rohr gleichzeitig mit dem Rohr in einen schwingenden Zustand versetzt. Die Ausgestaltung des weiteren Rohrs bzw. der weiteren U-Form bzw. der weiteren Messabschnitte bzw. des weiteren Zwischenabschnitts kann dergestalt ausgebildet sein, wie dies vorliegend mit Bezug auf das Rohr bzw. die U-Form bzw. die Messabschnitte bzw. den Zwischenabschnitt erläutert ist. Indem das Rohr und das weitere Rohr an voneinander weg weisenden Seiten des Montagekörpers angeordnet sind und der Schwingungsgeber das Rohr und das weitere Rohr gleichzeitig mit einer Schwingung beaufschlagt, kann besonders zuverlässig und auf einfache Weise sichergestellt sein, dass der Montagekörper möglichst wenig Bewegung vollführt, während das Rohr und das weitere Rohr schwingen, sodass am Übergang vom Rohr bzw. weiteren Rohr zum Montagekörper eine möglichst große Dehnung mit möglichst geringem Energieaufwand zum Anregen der Rohre zur Vollführung einer Schwingung erreicht werden kann.

In einer Ausführungsform ist an jedem der weiteren Messabschnitte des weiteren Rohrs, unmittelbar an dem jeweiligen weiteren Messabschnitt oder an einem mit dem jeweiligen weiteren Messabschnitt verbundenen Körper, jeweils ein weiterer Dehnungsmesssensor angeordnet, der zum Ausgeben eines weiteren Messsignals ausgebildet ist, das eine Dehnung des jeweiligen weiteren Messabschnitts des weiteren Rohrs charakterisiert. Der Schwingungsgeber, das weitere Rohr und die weiteren Dehnungsmesssensoren sind dergestalt zueinander korrespondierend ausgebildet, dass in dem schwingenden Zustand des weiteren Rohrs das von den weiteren Dehnungsmesssensoren jeweils ausgegebene weitere Messsignal jeweils eine von der Schwingung abhängige Schwingungsfrequenz aufweist und dass mittels eines im schwingenden Zustand des weiteren Rohrs erfolgenden Abgleichs der weiteren Messsignale der beiden weiteren Dehnungsmesssensoren, insbesondere mittels einer im schwingenden Zustand des weiteren Rohrs durch den Fluidfluss erzeugten Phasenverschiebung zwischen den weiteren Messsignalen der beiden weiteren Dehnungsmesssensoren, der Massestrom eines weiteren Fluidflusses, der durch das weitere Rohr strömt, quantifizierbar ist. Die Ausgestaltung der weiteren Dehnungsmesssensoren, deren Anordnung an dem jeweiligen weiteren Messabschnitt, die Gewinnung von Messsignalen und die Verarbeitung von Messsignalen sowie das Zusammenwirken mit dem Schwingungsgeber kann mit Bezug auf das weitere Rohr erfolgen, wie dies vorliegend mit Bezug auf das Rohr erläutert ist, wobei insbesondere die weiteren Dehnungsmesssensoren und die Dehnungsmesssensoren jeweils an dem Montagekörper angeordnet sein können, jedoch an jeweils voneinander beabstandeten Abschnitten des Montagekörpers, an denen jeweils genau einer der Messabschnitte des Montagekörpers angeordnet ist, wobei die in einem der Messabschnitte erfolgte Dehnung ausschließlich in genau dem Abschnitt eine Dehnung des Montagekörpers erzeugt, an dem der jeweilige Messabschnitt befestigt ist.

In einer Ausführungsform ist der Schwingungsgeber dazu ausgebildet, das Rohr im schwingenden Zustand in einer Richtung schwingen zu lassen, die zumindest eine Komponente senkrecht zu einer Achse aufweist, die als Winkelhalbierende der U-Form ausgebildet ist und/oder die parallel zu genau der Raumrichtung verläuft, mit Bezug auf die das Fluid in den beiden Messabschnitten, wie oben erläutert, sich in entgegengesetzte Richtungen bewegt. In einer Ausführungsform ist der Schwingungsgeber dazu ausgebildet, das Rohr im schwingenden Zustand in einer Richtung schwingen zu lassen, die zumindest mit einer Komponente senkrecht auf einer Ebene steht, in der im Ruhezustand der Messeinrichtung die Rohrmittelpunkte des Rohrs in den Messabschnitten liegen. Durch das Anregen des Rohrs zum Durchführen einer Schwingung dergestalt, dass das Rohr in eine solche Richtung schwingt, die senkrecht zu der genannten Achse bzw. zu der genannten Raumrichtung bzw. zu der genannten Ebene steht, kann mit möglichst geringem Energieaufwand ein möglichst großer Corioliseffekt erzielt werden, d. h. ein möglichst großes, durch einen Abgleich der Messsignale der Dehnungsmesssensoren erzeugtes Auswertesignal erzeugt werden, das den Massestrom quantifiziert. Allgemein vorteilhaft ist vorgesehen, dass die Rohrmittelpunkte des Rohrs beider Messabschnitte im Ruhezustand der Messeinrichtung in einer Ebene liegen.

In einer Ausführungsform sind die Dehnungsmesssensoren jeweils als Halbleiter-Dehnungsmesssensor, insbesondere als Si-Dehnungsmesssensor, d. h. im Wesentlichen aus Silizium bestehend, beispielsweise mittels eines Si-Wafers, insbesondere dotierten Si-Wafers, hergestellt, ausgebildet. Beispielsweise können solche Halbleiter-Dehnungsmesssensoren einen Sensorkörperabschnitt aufweisen, der auf einen Wafer aufgebracht oder in einem Wafer integriert ist und auf den Elektroden zur Messung von Widerständen aufgebracht werden, beispielsweise mittels üblicher Halbleiter-Kontaktierungstechnologie, wie etwa Lithographie und/oder Dünnschichttechnik, wobei bevorzugt der Messkörper ein Si-Kristall ist, der insbesondere dotiert sein kann. Der Wafer bildet somit ein Substrat aus, auf dem der Sensorkörperabschnitt angeordnet ist. Beispielsweise kann der Sensorkörperabschnitt in dem Wafer integriert ausgebildet sein, indem der Wafer (der bevorzugt ein Si-Kristall ist) mit Ionen zur Dotierung lokal bestrahlt wird. Beispielsweise kann der Sensorkörperabschnitt auf dem Wafer angeordnet werden, indem ein Si-Kristall, insbesondere dotierter Si-Kristall, mittels Epitaxie-Verfahrens auf dem Wafer aufgebracht wird. Halbleiter-Dehnungsmesssensoren, die einen Si-Kristall bzw. Si-Kristall-Sensorkörperabschnitt umfassen, werden vorliegend als Si-Kristall-Dehnungsmesssensoren bezeichnet. Halbleiter-Dehnungsmesssensoren beruhen auf dem Grundprinzip, dass durch eine Dehnung des Halbleiter-Dehnungsmesssensors die Bandstruktur verändert wird, wodurch sich seine Resistivität verändert. Als besonders vorteilhaft haben sich Si-Kristall-Dehnungsmesssensoren herausstellt, bei denen aufgrund der Si-Kristallstruktur die Veränderung der Bandstruktur besonders gut reproduzierbar ist und zu sehr präzisen Veränderungen der Resistivität führt. Dabei hat sich als besonders vorteilhaft herausgestellt, dass solche Halbleiter-Dehnungsmesssensoren, insbesondere Si-Dehnungsmesssensoren, insbesondere Si-Kristall-Dehnungsmesssensoren, auch zur Detektion von Dehnungen in zwei aufeinander senkrecht stehenden Richtungen geeignet sind, da sich der Widerstand des Halbleiters sowohl in Abhängigkeit von einer ersten als auch in Abhängigkeit von einer zweiten, auf der ersten senkrecht stehenden Richtung verändert. So kann an einem solchen Halbleiter durch Messung des Widerstands die Veränderung der Bandstruktur festgestellt werden, die auf einer Dehnung des Halbleiters in den beiden verschiedenen Richtungen beruht und hierauf präzise auf eine Dehnung des Dehnungsmesssensors in diesen beiden Richtungen rückgeschlossen werden. Es hat sich herausgestellt, dass ein solcher Halbleiter-Dehnungsmesssensor einen besonders großen K-Faktor aufweist, d. h. ein besonders großes Verhältnis zwischen der Widerstandsänderung zur Längenänderung des Dehnungsmesssensors in einer bestimmten Messrichtung. Der K-Faktor wird üblicherweise angegeben als:

$$K = \frac{\Delta R/R}{\varepsilon}$$

, wobei $\varepsilon$ die Längenänderung, d. h. Dehnung des Dehnungsmesssensors, charakterisiert und R den Widerstand des Dehnungsmesssensors angibt. Im Vergleich zu herkömmlichen Foliendehnungsmesssensoren kann ein Halbleiter-Dehnungsmesssensor einen um etwa 40-fach größeren K-Faktor aufweisen. Die Erfinder haben erkannt, dass trotz der erhöhten Herstellkosten für einen solchen Halbleiter-Dehnungsmesssensor ein solcher Dehnungsmesssensor dennoch kostengünstig und zur Realisierung einer hochauflösenden Messeinrichtung eingesetzt werden kann, da ein solcher Halbleiter-Dehnungsmesssensor besonders klein ausgestaltet werden kann und darüber hinaus an diesem auf besonders einfache Weise mittels Halbleiter-Kontaktierungstechnik elektrische Elektroden vorgesehen werden können, mittels derer der Halbleiter-Dehnungsmesssensor kontaktiert bzw. mit Strom gespeist und ausgelesen werden kann. Als besonders vorteilhaft hat sich herausgestellt, die Dehnungsmesssensoren jeweils dergestalt auszugestalten, dass sie eine Dicke von weniger als 500 $\mu$m, insbesondere weniger als 200 $\mu$m, insbesondere weniger als 100 $\mu$m, insbesondere weniger als 50 $\mu$m, und/oder eine flächige Erstreckung von weniger als 1 mm$^2$, insbesondere weniger als 0,5 mm$^2$, insbesondere weniger als 0,3 mm$^2$ aufweisen. Die flächige Erstreckung gibt dabei allgemein die Erstreckung des Dehnungsmesssensors entlang zwei aufeinander senkrecht stehenden Flächenrichtungen an, wobei die Dicke des Dehnungsmesssensors die Erstreckungslänge des Dehnungsmesssensors senkrecht zu den beiden Flächenrichtungen angibt. Die Erfinder haben festgestellt, dass gerade mit solchen besonders dünnen und/oder besonders flächig kleinen Dehnungsmesssensoren auf besonders kostengünstige Weise eine hochauflösende Messeinrichtung realisiert werden kann, insbesondere auch unter Realisierung von mehreren Elektroden, insbesondere wie unten ausgeführt, an einem solchen Dehnungsmesssensor.

In einer Ausführungsform sind die Dehnungsmesssensoren durch Aufglasen mit dem jeweiligen Messabschnitt verbunden. Das Aufglasen kann unmittelbar an dem Messabschnitt oder an dem mit dem Messabschnitt verbundenen Körper erfolgen. An dieser Stelle sei allgemein darauf hingewiesen, dass jeweils einer der Dehnungsmesssensoren jeweils einem der Messabschnitte zugeordnet ist, wobei der jeweilige Dehnungsmesssensor an dem ihm zugeordneten Messabschnitt so befestigt ist, dass er eine Dehnung des Messabschnitts aufnehmen kann. Bei einer mittelbaren Verbindung des Dehnungsmesssensors mit dem Messabschnitt mittels eines Körpers ist der Körper über eine Körperfläche so mit dem Messabschnitt verbunden, dass er die Dehnung des Messabschnitts aufnimmt. Die Erfinder haben festgestellt, dass durch die Anbindung des Dehnungsmesssensors an den Messabschnitt mittels Aufglasen der Dehnungsmesssensor besonders zuverlässig starr mit dem jeweiligen Messabschnitt verbunden werden kann, sodass eine Dehnung des Messabschnitts möglichst verlustfrei auf den Dehnungsmesssensor übertragen wird. Das Aufglasen ist ein bekannter Prozess, bei dem Glas, das üblicherweise auf amorphem SiO2 basiert, als Bindemittel zum Verbinden des Dehnungsmesssensors mit dem Messabschnitt verwendet wird. Bei einem solchen Aufglasen wird üblicherweise ein Glasfritte-Material zwischen dem Dehnungsmesssensor und dem Messabschnitt vorgesehen, wonach mittels Durchfahrens vordefinierter Temperaturverläufe ein Ausheizen erfolgt. Besonders bevorzugt wird bei dem Ausheizen der gesamte Verbindungsbereich zwischen Dehnungsmesssensor und Messabschnitt, insbesondere somit über die gesamte untenstehend erläuterte Messfläche, zunächst auf ca. 400°C aufgeheizt, anschließend auf unter 50°C abgekühlt und anschließend erneut aufgeheizt, zumindest bis 400°C, und wieder abgekühlt. Durch das Aufglasen ist der Dehnungsmesssensor besonders zuverlässig und starr mit dem Messabschnitt bzw. Körper verbunden, wobei besonders bevorzugt aufgrund des Aufglasens der Dehnungsmesssensor durch eine anorganische Verbindung mit dem ihm zugeordneten Messabschnitt verbunden ist. Bevorzugt sind sowohl der Dehnungsmesssensor als auch sämtliches Material, mittels dessen der Dehnungsmesssensor mit dem Messabschnitt verbunden ist, anorganisch, wodurch einer alterungsbedingten Funktionsbeeinträchtigung besonders wirksam vorgebeugt sein kann. Besonders bevorzugt ist jeweils eine elektrisch isolierende Glasschicht zwischen dem jeweiligen Dehnungsmesssensor und dem jeweiligen, d. h. ihm zugeordneten, Messabschnitt vorgesehen. Bevorzugt weist diese Glasschicht eine Dicke von mindestens 50 nm, sondern mindestens 100 nm, insbesondere mindestens 200 nm auf. Durch die elektrisch isolierende Glasschicht kann eine besonders gute elektrische Entkopplung zwischen dem Rohr und dem Dehnungsmesssensor realisiert sein, wodurch Störeinflüsse des Rohrs auf das Auslesen von Messsignalen aus dem Dehnungsmesssensoren besonders vorteilhaft reduziert sein können.

In einer Ausführungsform weisen die Dehnungsmesssensoren jeweils eine Messfläche auf, die sich in einer ersten Flächenrichtung und in einer zweiten Flächenrichtung erstreckt, wobei die zweite Flächenrichtung senkrecht auf der ersten Flächenrichtung steht. Die Messfläche ist durch die beiden Flächenrichtungen aufgespannt. Bevorzugt ist der Dehnungsmesssensor als flächiger Dehnungsmesssensor ausgestaltet, dessen Dicke durch seine Erstreckungslänge senkrecht zur Messfläche definiert ist. Die Flächenrichtungen können geradlinig oder gekrümmt verlaufen, in einer Ausführungsform verläuft eine der Flächenrichtungen geradlinig, die andere gekrümmt. Bevorzugt sind die Dehnungsmesssensoren als Halbleiter-Dehnungsmesssensoren ausgebildet und jeweils mittels eines Wafers hergestellt und weisen eine ebene Seite auf, die die Messfläche als ebene Messfläche ausbildet, so dass die Messrichtungen jeweils gerade sind. Bevorzugt weist der Dehnungsmesssensor über seine Erstreckung entlang der ersten und zweiten Flächenrichtung hinweg überall dieselbe Dicke auf. Besonders bevorzugt erstreckt sich die Messfläche in jeder der Flächenrichtungen über mindestens 0,1 mm, insbesondere mindestens 0,2 mm, insbesondere mindestens 0,3 mm und weniger als 2 mm, insbesondere weniger als 1 mm, insbesondere weniger als 0,8 mm. Bevorzugt weist die Fläche einen Flächeninhalt von mindestens 0,1 mm², insbesondere mindestens 0,2 mm², insbesondere weniger als 1 mm², insbesondere weniger als 0,5 mm², insbesondere weniger als 0,3 mm² auf. Besonders bevorzugt ist die Erstreckungslänge des Dehnungsmesssensors entlang erster und zweiter Flächenrichtung durch die Messfläche definiert, sodass sich der Dehnungsmesssensor in der ersten und zweiten Flächenrichtung nicht über die Messfläche hinaus erstreckt. Dabei ist auf den jeweiligen Dehnungsmesssensor abgestellt. Besonders bevorzugt sind die Dehnungsmesssensoren jeweils über ihre Messfläche hinweg starr mit dem jeweiligen Messabschnitt bzw. Körper verbunden, der ihnen jeweils zugeordnet ist. Innerhalb der Erstreckung der Messfläche, die die Messfläche entlang der ersten und zweiten Flächenrichtung aufweist, sind an dem Dehnungsmesssensor mindestens zwei Elektroden, insbesondere mindestens vier Elektroden angeordnet. Die genannten Elektroden sind bevorzugt sämtlich an dem Sensorkörperabschnitt angeordnet. Dabei können die Elektroden zur Messfläche in eine Richtung versetzt angeordnet sein, die sich senkrecht zur ersten und zweiten Flächenrichtung erstreckt. Beispielsweise kann die Messfläche eine Unterseite des Dehnungsmesssensors ausbilden, wobei die Elektroden an der Oberseite des Dehnungsmesssensors angeordnet sind, sich jedoch innerhalb der Erstreckung der Messfläche entlang der ersten und zweiten Flächenrichtung befinden. Besonders bevorzugt sind vier Elektroden innerhalb der Erstreckung der Messfläche entlang den Flächenrichtungen an dem Dehnungsmesssensor vorgesehen. Bevorzugt sind die Elektroden als Vollbrücke verschaltet. Das Vorsehen einer solchen Vollbrücke ist in der Messtechnik hinreichend bekannt und besonders vorteilhaft, da durch eine solche Brückenschaltung eine Differenzbildung zwischen in der Brückenschaltung miteinander verschalteten Widerständen inhärent gewährleistet ist, wodurch Umwelteinflüsse, wie etwa Temperatureinflüsse, in ihren Auswirkungen auf die Korrektheit des erzielten Messergebnisses bzw. des ausgegebenen Messsignals nach Möglichkeit reduziert werden können. Eine solche Brückenschaltung weist üblicherweise zwei parallele Brückenarme auf, in denen jeweils zumindest zwei Widerstände in Reihe geschaltet sind, wobei an den Armen ein Mittenabgriff zwischen zwei Widerständen der Arme erfolgt. Durch Differenzmessung zwischen den Mittenabgriffen kann ein Sensorsignal erzeugt werden, das anschließend elektronisch aufbereitet wird, wobei das Sensorsignal selbst das Messsignal des Dehnungsmesssensors sein kann oder das aufbereitete Signal. Durch das Vorsehen von vier Elektroden können durch paarweises Abgreifen von Widerständen zwischen jeweils zwei dieser Elektroden sechs verschiedene Widerstände abgegriffen werden, wodurch am Dehnungsmesssensor selbst die erforderlichen Elektroden für eine Vollbrückenschaltung vorgesehen sein können, wobei der Dehnungsmesssensor gleichzeitig eine sehr geringe Größe aufweisen kann. Besonders bevorzugt ist an dem Dehnungsmesssensor eine weitere Elektrode vorgesehen, durch die der Dehnungsmesssensor mit einem Potenzial beaufschlagt werden kann, insbesondere um parasitäre Ströme zu verhindern. Bevorzugt ist die weitere Elektrode außerhalb eines Sensorkörperabschnitts des Dehnungsmesssensors angeordnet, an dem die erläuterten übrigen Elektroden angeordnet sind (von denen z.B. mindestens zwei, insbesondere mindestens vier vorgesehen sind und zwischen denen ein Widerstand abgegriffen wird, so dass sie als Messelektroden vorgesehen sind). Beispielsweise können die übrigen (z.B. vier) Elektroden (d.h. die Messelektroden) jeweils an einer Oberfläche eines auf einem Substrat angeordneten Sensorkörperabschnitt s angeordnet sein, wohingegen die weitere Elektrode außerhalb des Sensorkörperabschnitts an dem Substrat angeordnet ist, so dass ein auf die weitere Elektrode aufgebrachtes Potenzial eine Widerstandsmessung zwischen den übrigen Elektroden nicht beeinträchtigt sondern nur der Vermeidung parasitärer Ströme dient. Ein von dem Dehnungsmesssensor ausgebendes (passiv auslesbar oder aktiv ausgebendes) Messsignal, das eine Dehnung des Dehnungsmesssensors an seiner Messfläche in einer Messrichtung charakterisiert, ist über die genannten, an dem Dehnungsmesssensor vorgesehenen Elektroden auslesbar. In einer Ausführungsform ist an den Dehnungsmesssensor selbst eine Differenzschaltung, insbesondere Brückenschaltung vorgesehen, sodass aus dem Dehnungsmesssensor selbst ein Messsignal ausgelesen werden kann, das durch Differenzbildung zwischen den an den Elektroden vorliegenden Spannungen und/oder Strömen ermittelt wird. In einer Ausführungsform wird das Messsignal unmittelbar durch die Elektroden bereitgestellt und anschließend mit einer Datenverarbeitungseinrichtung verarbeitet. Allgemein bevorzugt sind die Dehnungsmesssensoren jeweils über ihre Messfläche hinweg stoffschlüssig mit dem jeweiligen Messabschnitt bzw. Körper verbunden, an dem sie angeordnet sind. Besonders bevorzugt sind die Dehnungsmesssensoren durch eine anorganische Verbindung, die zwischen dem jeweiligen Dehnungsmesssensor und dem jeweiligen Messabschnitt bzw. Körper vorgesehen ist, mit dem jeweiligen Messabschnitt verbunden.

In einer Ausführungsform sind an zumindest einigen der Dehnungsmesssensoren mindestens zwei, insbesondere mindestens vier Elektroden angeordnet, wobei aus den Elektroden ein Messsignal auslesbar ist, das sowohl von einer Dehnung des Dehnungsmesssensors in der Messrichtung als auch von einer Dehnung des Dehnungsmesssensors in einer senkrecht auf der Messrichtung stehenden Zusatzmessrichtung abhängt. Somit beeinflussen Dehnungen, die in zwei aufeinander senkrecht stehenden Richtungen innerhalb der Messfläche auf den Dehnungsmesssensor ausgeübt werden, das Messsignal. Aus einem solchen Dehnungsmesssensor sind somit Messsignale auslesbar, die die Dehnung des Dehnungsmesssensors in zwei aufeinander senkrecht stehenden Messrichtungen charakterisieren. Durch Auslesen dieser Messsignale aus dem Dehnungsmesssensor kann der Massestrom besonders zuverlässig ermittelbar sein, da die in den beiden verschiedenen Richtungen vorliegenden Dehnungen beide zur Auswertung bzw. Bestimmung des Massestroms verwendet werden können. Die Ausrichtung des Dehnungsmesssensors an dem jeweiligen Messabschnitt ermöglicht eine Festlegung, in welche Richtungen bzw. in welcher Richtung bei einer bestimmungsgemäßen Verwendung der Messeinrichtung aufgrund der Ausgestaltung und Anordnung des Messabschnitts eine Dehnung des Dehnungsmesssensors erfolgt. Bevorzugt sind an beiden Dehnungsmesssensoren, die an den beiden verschiedenen Messabschnitten des Rohrs angeordnet sind, jeweils mindestens zwei, insbesondere mindestens vier Elektroden angeordnet und ist aus den beiden Dehnungsmesssensoren jeweils ein solches Messsignal auslesbar, wobei der Massestrom unter Berücksichtigung eines Abgleichs zwischen den Messsignalen der beiden Dehnungsmesssensoren quantifizierbar ist. Hierdurch kann ein besonders hohes Maß an Redundanz gewährleistet sein, da die Messsignale schwingende Signale sind, deren Schwingungsfrequenz von der auf das Rohr aufgeprägten Schwingung abhängen, wobei durch das Abgleichen der Messsignale der beiden Dehnungsmesssensoren zwei verschiedene Informationen gewonnen werden können, wobei aus einem Abgleich dieser beiden Informationen der Massestrom besonders präzise ermittelbar ist. Wie oben erläutert kann der Abgleich zwischen den Messsignalen der beiden Dehnungsmesssensoren jeweils durch Ermittlung der Phasenverschiebung zwischen den Messsignalen der beiden Dehnungsmesssensoren erfolgen. Die Erfinder haben erkannt, dass gerade bei dem Vorsehen eines Halbleiter-Dehnungsmesssensors mit einer besonders geringen Größe des Dehnungsmesssensors und mit besonders geringen Herstellkosten hierdurch eine besonders präzise Ermittlung des Massestroms und insbesondere hierüber des Volumenstroms ermöglicht ist.

Allgemein bevorzugt sind die Dehnungsmesssensoren jeweils dazu ausgebildet, mit dem von ihnen jeweils ausgegebenen Messsignal eine Dehnung des jeweiligen Messabschnitts des Rohrs entlang einer Dehnungsrichtung zu charakterisieren. Die Dehnungsrichtung kann der oben erläuterten Messrichtung entsprechen. Die Dehnungsrichtung gibt die Richtung an, in der das Rohr gedehnt wird, und entsprechend auch die Richtung, in der der Dehnungsmesssensor an seiner Messfläche gedehnt wird, wenn eine solche vorgesehen ist und er über die Messfläche wie oben erläutert mit dem Messabschnitt verbunden ist. Bevorzugt verläuft die Dehnungsrichtung zumindest mit einer Komponente, insbesondere vollständig, senkrecht zu einer Anregungsrichtung, in der der Schwingungsgeber das Rohr zum Anregen der Schwingung bewegt. Diese Anregungsrichtung kann insbesondere der Bewegungsrichtung entsprechen, entlang derer sich die oben erläuterte Bewegungstrecke erstreckt, über die hinweg sich das Rohr im schwingenden Zustand bewegt. Indem die Dehnungsrichtung im Wesentlichen senkrecht auf zumindest einer Komponente der Anregungsrichtung, insbesondere auf der Anregungsrichtung steht, kann mit besonders geringem Energieaufwand, nämlich mit möglichst geringer Schwingungsamplitude, die von dem Schwingungsgeber auf das Rohr aufgeprägt wird, ein den Massestrom möglichst präzise charakterisierendes Messsignal erzeugt werden, da hierdurch die Corioliskraft besonders effektiv auf die Verformung des Rohrs hinwirkt.

Die Erfindung betrifft ferner ein Messsystem, das eine erfindungsgemäße Messeinrichtung umfasst. Das Messsystem umfasst ferner eine Datenverarbeitungseinrichtung. In einer Ausführungsform ist die Datenverarbeitungseinrichtung zum Ansteuern des Schwingungsgebers ausgebildet. In einer Ausführungsform ist die Datenverarbeitungseinrichtung zum Auslesen der Dehnungsmesssensoren und zum Ermitteln eines Werts für den Massestrom des Fluidflusses aus den von den Dehnungsmesssensoren ausgelesenen Messsignalen ausgebildet. Die Datenverarbeitungseinrichtung kann eine in sich zusammenhängende Baueinheit sein oder mehrere voneinander getrennte Baueinheiten umfassen. Beispielsweise kann eine Baueinheit der Datenverarbeitungseinrichtung zum Ansteuern des Schwingungsgebers ausgebildet sein und eine andere Baueinheit zum Auslesen der Dehnungsmesssensoren und/oder eine andere Baueinheit zum Ermitteln eines Werts für den Massestrom des Fluidflusses aus den Messsignalen ausgebildet sein.

Die Erfindung betrifft ferner ein Verfahren zum Ermitteln eines Massestroms eines Fluidflusses durch ein Rohr. Das Rohr weist zwei Messabschnitte auf, die durch einen Zwischenabschnitt des Rohrs miteinander verbunden sind. Die Messabschnitte bilden gemeinsam mit dem Zwischenabschnitt eine U-Form aus. Zur Erzeugung des Fluidflusses wird ein Fluid durch das Rohr geleitet und wird das Rohr in eine Schwingung versetzt. Aus einem ersten Dehnungsmesssensor, der an einem ersten der Messabschnitte des Rohrs befestigt ist, wird ein erstes Messsignal ausgelesen, das eine erste Dehnung des ersten Messabschnitts während der Schwingung quantifiziert. Aus einem zweiten Dehnungsmesssensor, der an einem zweiten der Messabschnitte des Rohrs befestigt ist, wird ein zweites Messsignal ausgelesen, das eine zweite Dehnung des zweiten Messabschnitts während der Schwingung quantifiziert. Die zweite Dehnung ist somit dem zweiten Messabschnitt zugeordnet, die erste Dehnung dem ersten Messabschnitt, und das zweite Messsignal ist dem zweiten Dehnungsmesssensor zugeordnet, wohingegen das erste Messsignal dem ersten Dehnungsmesssensor zugeordnet ist. Erster und zweiter Dehnungsmesssensor können unmittelbar an dem jeweiligen Messabschnitt angeordnet sein oder mittels eines mit dem jeweiligen Messabschnitt verbundenen Körpers an dem jeweiligen Messabschnitt befestigt sein, in jedem Fall ist durch die aus den Dehnungsmesssensoren ausgegebenen Messignale die Dehnung des jeweiligen Messabschnitts charakterisierbar. Die Begriffe "erstes" und "zweites" definieren somit die entsprechende Zuordnung. Bei dem erfindungsgemäßen Verfahren wird, während das Rohr schwingt, d. h. während der Schwingung des Rohrs, das erste Messsignal mit dem zweiten Messsignal abgeglichen und anhand des Abgleichs der Massestrom ermittelt. Besonders bevorzugt wird eine während der Schwingung auftretende Phasenverschiebung zwischen dem ersten und dem zweiten Messsignal ermittelt und mittels der Phasenverschiebung der Massestrom ermittelt. Das erfindungsgemäße Verfahren kann in erfindungsgemäßen Ausführungsformen Merkmale aufweisen, die vorliegend im Zusammenhang mit Ausführungsformen der erfindungsgemäßen Messeinrichtung und/oder gattungsgemäßen Messeinrichtungen beschrieben sind. Die erfindungsgemäße Messeinrichtung kann in vorteilhaften Ausführungsformen Merkmale aufweisen, die vorliegend im Zusammenhang mit gattungsgemäßen Messeinrichtungen und/oder Ausführungsformen des erfindungsgemäßen Verfahrens beschrieben sind.

Die Erfindung wird nachfolgend unter Bezugnahme auf drei Figuren anhand von Ausführungsbeispielen näher erläutert.

Es zeigen:

Figur 1: In einer schematischen Prinzipdarstellung eine Ausführungsform einer erfindungsgemäßen Messeinrichtung;

Figur 2: In einer schematischen Prinzipdarstellung eine Ausführungsform eines erfindungsgemäßen Messsystems;

Figur 3: In einer schematischen Prinzipdarstellung eine weitere Ausführungsform einer erfindungsgemäßen Messeinrichtung.

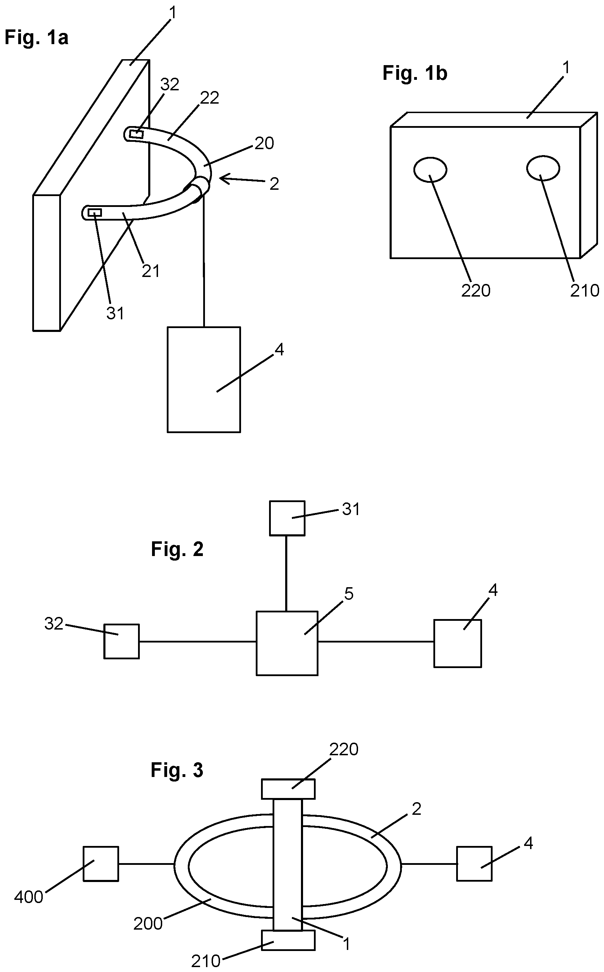

In Figur 1 umfassend die Figuren 1a und 1b ist eine Ausführungsform einer erfindungsgemäßen Messeinrichtung stark vereinfacht schematisch dargestellt. Die Messeinrichtung umfasst einen Montagekörper 1, der vorliegend nach Art einer massiven Platte ausgebildet ist.

Die Messeinrichtung umfasst ferner ein Rohr 2, das zwei Messabschnitte 21, 22 aufweist, die über einen Zwischenabschnitt 20 miteinander verbunden sind. Die Messabschnitte 21, 22 und der Zwischenabschnitt 20 sind integral einstückig in dem Rohr ausgebildet, und die Messabschnitte 21, 22 sind über den Zwischenabschnitt 20 unmittelbar miteinander verbunden. Die Messabschnitte 21, 22 und der Zwischenabschnitt 20 bilden gemeinsam eine U-Form aus. Während in Figur 1a eine Schrägansicht auf die Vorderseite des Montagekörpers 1 gezeigt ist, an der das Rohr 2 vorgesehen ist, ist in Figur 1b eine Ansicht auf die Rückseite des Montagekörpers 1 gezeigt, in dem ein Rohrzulauf 210 und ein Rohrablauf 220 des Rohrs 2 gezeigt sind. Eine erfindungsgemäße Messeinrichtung weist allgemein besonders bevorzugt einen solchen Rohrzulauf 210 und einen Rohrablauf 220 auf, wobei durch den Rohrzulauf 210 ein Fluid in das Rohr eingeführt werden kann und durch den Rohrablauf 220 Fluid aus dem Rohr 2 austreten kann. Vorliegend und erfindungsgemäß allgemein vorteilhaft ist der Rohrzulauf 210 an dem ersten Messabschnitt 21 der beiden Messabschnitte 21, 22 vorgesehen und der Rohrablauf 220 an dem zweiten Messabschnitt 22 der Messabschnitte 21, 22 vorgesehen, sodass ein Fluid bei einer bestimmungsgemäßen Verwendung der Messeinrichtung über den Rohrzulauf 210 in das Rohr 2 eingeführt wird, anschließend zuerst durch den ersten Messabschnitt 21, dann durch den Zwischenabschnitt 20 und dann durch den zweiten Messabschnitt 22 fließt, bis es am Rohrablauf 220 aus dem Rohr 2 wieder austritt.

Wie aus Figur 1a zu erkennen, weist die in Figur 1 gezeigte Ausführungsform einer erfindungsgemäßen Messeinrichtung einen Schwingungsgeber 4 auf, der mechanisch an dem Zwischenabschnitt 20 des Rohrs 2 angekoppelt ist. Der Schwingungsgeber 4 ist dazu ausgebildet, auf das Rohr 2 eine Schwingung aufzuprägen, wobei er hierzu eine Bewegung in einer Anregungsrichtung auf den Zwischenabschnitt 20 ausübt, die senkrecht zu einer Ebene verläuft, in der die Rohrmittelpunkte des Rohrs 2 in den Messabschnitten 21, 22 liegen. Hierdurch kann mit möglichst geringer Schwingungsamplitude der durch den Schwingungsgeber 4 auf das Rohr 2 aufgeprägten Schwingung eine möglichst große Verformung des Rohrs 2 erzeugt werden, wenn das Rohr 2 durch einen Fluidfluss durchströmt wird. An dem ersten Messabschnitt 21 ist ein erster Dehnungsmesssensor 31 angeordnet, an den zweiten Messabschnitt 22 ist ein zweiter Dehnungsmesssensor 32 angeordnet. Die beiden Dehnungsmesssensoren 31, 32 sind jeweils als Si-Kristall-Dehnungsmesssensoren ausgebildet und sehr nah am Montagekörper 1 angeordnet. Montagekörper 1, Rohr 2 und Schwingungsgeber 4 sind dergestalt zueinander korrespondierend ausgebildet, dass bei einem Anregen der Schwingung auf das Rohr 2 durch den Schwingungsgeber 4 der Montagekörper 1 im Wesentlichen bewegungslos verbleibt. Somit kann durch die Dehnungsmesssensoren 31, 32, die sehr nah am Übergang, insbesondere unmittelbar am Übergang der Messabschnitte 21, 22 zum Montagekörper 1 vorgesehen sind, bereits eine sehr kleine Verformung des Rohrs 2 präzise festgestellt werden.

In Figur 2 ist in einer stark vereinfachten schematischen Darstellung eine Ausführungsform eines erfindungsgemäßen Messsystems dargestellt. Das Messsystem umfasst eine Messeinrichtung, wie sie in Figur 1 dargestellt ist. Das Messsystem umfasst ferner eine Datenverarbeitungseinrichtung 5. Die Datenverarbeitungseinrichtung 5 ist über Datenleitungen sowohl mit dem Schwingungsgeber 4 als auch mit den Dehnungsmesssensoren 31, 32 verbunden. Die Datenverarbeitungseinrichtung 5 ist dazu ausgebildet, den Schwingungsgeber 4 so anzusteuern, dass er das Rohr 2 mit einer vordefinierten Schwingung. Ferner ist die Datenverarbeitungseinrichtung 5 dazu ausgebildet, aus beiden Dehnungsmesssensoren 31, 32 jeweils Messsignale auszulesen und diese Messsignale miteinander abzugleichen. In der vorliegend beschriebenen Ausführungsform wird aus jedem der Dehnungsmesssensoren 31, 32 jeweils ein Messsignal ausgelesen, das sowohl von einer Dehnung des jeweiligen Dehnungsmesssensors 31, 32 in einer ersten Messrichtung als auch von einer Dehnung des jeweiligen Dehnungsmesssensors 31, 32 in einer zweiten, auf der ersten senkrecht stehenden Messrichtung abhängt, wobei die Dehnung des Dehnungsmesssensors 31, 32 eine Dehnung an der Messfläche des jeweiligen Dehnungsmesssensors 31, 32 ist, mit der der jeweilige Dehnungsmesssensor 31, 32 an dem jeweiligen Messabschnitt 21, 22 befestigt ist. In der vorliegenden Ausführungsform ermittelt die Datenverarbeitungseinrichtung 5 einen Wert für den Massestrom eines durch das Rohr 2 fließenden Fluids aus einer Phasenverschiebung des ersten Messsignals des ersten Dehnungsmesssensors 31 zu dem ersten Messsignal des zweiten Dehnungsmesssensors 32 und aus einer Phasenverschiebung des zweiten Messsignals des ersten Dehnungsmesssensors 31 gegenüber dem zweiten Messsignal des zweiten Dehnungsmesssensors 32. Dabei ist zu berücksichtigen, dass die von den Dehnungsmesssensoren 31, 32 ausgegebenen Messsignale jeweils schwingende Signale sind, da die von ihnen charakterisierte Dehnung des Rohrs 2, d. h. der Wert der Dehnung, analog zu der auf das Rohr aufgeprägten Schwingung schwingt.

In Figur 3 ist eine weitere Ausführungsform einer erfindungsgemäßen Messeinrichtung stark vereinfacht schematisch dargestellt. Diese Messeinrichtung unterscheidet sich von der Messeinrichtung gemäß Figur 1 im Wesentlichen dadurch, dass die Messeinrichtung neben dem Rohr 2 ein weiteres Rohr 200 aufweist und neben dem Schwingungsgeber 4 einen weiteren Schwingungsgeber 400 aufweist und dass Rohrzulauf 210 und Rohrablauf 220 anders angeordnet sind. Das Rohr 2 und das weitere Rohr 200 sind an voneinander weg weisenden Seiten des Montagekörpers 1 angeordnet. Schwingungsgeber 4 und weiterer Schwingungsgeber 400 sind zueinander synchronisiert, sodass Rohr 2 und weiteres Rohr 200 ihre Schwingungen synchron durchführen. In einer Ausführungsform ist der weitere Schwingungsgeber 400 eine in den Schwingungsgeber 4 integrierte Baueinheit, so dass der Schwingungsgeber 4 mit einer ersten Baueinheit das Rohr 2 und mit einer zweiten Baueinheit das weitere Rohr 200 anregt. Bei der beschriebenen, besonders vorteilhaften Ausführungsform weist das Rohr 2 einen in Figur 3 nicht dargestellten ersten Messabschnitt und zweiten Messabschnitt und einen diese verbindenden Zwischenabschnitt auf, wie dies zur Figur 1 erläutert ist, und weist das weitere Rohr 200 einen in Figur 3 nicht dargestellten weiteren ersten Messabschnitt und weiteren zweiten Messabschnitt und weiteren Zwischenabschnitt auf, der die beiden weiteren Messabschnitte miteinander verbindet, wie dies analog zu Figur 1 dargestellt ist, wobei an den Messabschnitten von Rohr 2 und weiterem Rohr 200 jeweils ein Dehnungsmesssensor angeordnet ist. Die Messeinrichtung gemäß Figur 2 bringt den besonderen Vorteil mit sich, dass aufgrund der synchron ausgeführten Schwingung von Rohr 2 und weiterem Rohr 200 eine Bewegung des Montagekörpers 1 besonders effektiv verhindert werden kann, sodass eine Bewegung von Rohr 2 und Rohr 200, die durch den Schwingungsgeber 4 bzw. weiteren Schwingungsgeber 400 aufgeprägt wird, besonders effektiv zu einer Verformung von Rohr 2 bzw. weiterem Rohr 200 an deren Übergang zum Montagekörper 1 führt. Darüber hinaus ist durch das Vorsehen von Dehnungsmesssensoren sowohl am Rohr 2 als auch am weiteren Rohr 200 ein besonders hohes Maß an Redundanz gegeben.

Bezugszeichenliste

| | |
|---|---|
| 1 | Montagekörper |
| 2 | Rohr |
| 4 | Schwingungsgeber |
| 5 | Datenverarbeitungseinrichtung |
| 20 | Zwischenabschnitt |
| 21 | erster Messabschnitt |
| 22 | zweiter Messabschnitt |
| 31 | erster Dehnungsmesssensor |
| 32 | zweiter Dehnungsmesssensor |
| 200 | weiteres Rohr |
| 210 | Rohrzulauf |
| 220 | Rohrablauf |
| 400 | weiterer Schwingungsgeber |

**Patentansprüche**

1.   Messeinrichtung zum Ermitteln eines Massestroms eines durch ein Rohr (2) strömenden Fluidflusses, die Messeinrichtung umfassend das Rohr (2) und einen mit dem Rohr (2) gekoppelten Schwingungsgeber (4), der dazu ausgebildet ist, das Rohr (2) zum Ausführen einer Schwingung anzuregen und dadurch das Rohr (2) in einen schwingenden Zustand zu versetzen, wobei das Rohr (2) zwei voneinander beabstandete Messabschnitte (21, 22) aufweist, die durch einen Zwischenabschnitt (20) des Rohrs (2) miteinander verbunden sind, wobei in dem schwingenden Zustand die Messabschnitte (21, 22) gemeinsam mit dem Zwischenabschnitt (20) eine U-Form ausbilden, indem die Messabschnitte (21, 22) jeweils einen U-Schenkel und der Zwischenabschnitt (20) einen U-Boden der U-Form ausbilden, wobei insbesondere der Schwingungsgeber (4) an dem Zwischenabschnitt (20) des Rohrs (2) angekoppelt ist,
**dadurch gekennzeichnet, dass**
an jedem der Messabschnitte (21, 22) des Rohrs (2), unmittelbar an dem jeweiligen Messabschnitt (21, 22) oder an einem mit dem jeweiligen Messabschnitt (21, 22) verbundenen Körper, jeweils ein Dehnungsmesssensor (31, 32) angeordnet ist, der zum Ausgeben eines Messignals ausgebildet ist, das eine Dehnung des jeweiligen Messabschnitts (21, 22) des Rohrs (2) charakterisiert, wobei der Schwingungsgeber (4), das Rohr (2) und die Dehnungsmesssensoren (31, 32) dergestalt zueinander korrespondierend ausgebildet sind, dass in dem schwingenden Zustand des Rohrs (2) das von den Dehnungsmesssensoren (31, 32) ausgegebene Messignal jeweils eine von der Schwingung abhängige Schwingungsfrequenz aufweist und dass mittels eines im schwingenden Zustand des Rohrs (2) erfolgenden Abgleichs der Messignale der beiden Dehnungsmesssensoren (31, 32), insbesondere mittels einer im schwingenden Zustand des Rohrs (2) durch den Fluidfluss erzeugten Phasenverschiebung zwischen den Messignalen der beiden Dehnungsmesssensoren (31, 32), der Massestrom des Fluidflusses durch das Rohr (2) quantifizierbar ist.

2. Messeinrichtung nach Anspruch 1,
   **dadurch gekennzeichnet, dass**
   die Messeinrichtung einen Montagekörper (1) aufweist, an dem die Messabschnitte des Rohrs (2) mit ihren von dem Zwischenabschnitt (20) weg weisenden Enden befestigt sind, wobei insbesondere die Dehnungsmesssensoren (31, 32) jeweils näher an dem Montagekörper (1) als an dem Zwischenabschnitt (20) angeordnet sind, insbesondere in unmittelbarer Nähe zum Montagekörper (1) angeordnet sind oder an jeweils einem Abschnitt des Montagekörpers (1) angeordnet sind, der mit jeweils einem der Messabschnitte (21, 22) des Rohrs verbunden ist.

3. Messeinrichtung nach Anspruch 2,
   **dadurch gekennzeichnet, dass**
   der Schwingungsgeber (4) dazu ausgebildet ist, die Schwingung auf das Rohr (2) als Bewegung des Rohrs (2) relativ zum Montagekörper (1) aufzuprägen, wobei insbesondere der Schwingungsgeber (4), das Rohr (2) und der Montagekörper (1) dergestalt zueinander korrespondierend ausgebildet sind, dass der Montagekörper (1) während einer Bewegung des Rohrs (2), die das Rohr (2) aufgrund der von dem Schwingungsgeber (4) auf das Rohr (2) aufgeprägten Schwingung ausführt, sich um weniger als 10 %, insbesondere weniger als 1 %, einer Bewegungsstrecke bewegt, entlang derer sich das Rohr (2) während der Schwingung bewegt.

4. Messeinrichtung nach einem der Ansprüche 2 oder 3,
   die Messeinrichtung ein weiteres Rohr (200) aufweist, das zwei voneinander beabstandete weitere Messabschnitte aufweist, die durch einen weiteren Zwischenabschnitt des weiteren Rohrs (200) miteinander verbunden sind, wobei in dem schwingenden Zustand die weiteren Messabschnitte gemeinsam mit dem weiteren Zwischenabschnitt eine weitere U-Form ausbilden, indem die weiteren Messabschnitte jeweils einen weiteren U-Schenkel und der weitere Zwischenabschnitt (20) einen weiteren U-Boden der weiteren U-Form ausbilden, wobei die beiden weiteren Messabschnitte mit ihren von dem weiteren Zwischenabschnitt weg weisenden Enden an dem Montagekörper (1) befestigt sind und das Rohr (2) und das gegenüberliegende Rohr (200) an zwei von einander weg weisenden Seiten des Montagekörpers (1) angeordnet sind, wobei der Schwingungsgeber mit dem weiteren Rohr (200) dergestalt gekoppelt ist, dass er das weitere Rohr (200) gleichzeitig mit dem Rohr (2) in einen schwingenden Zustand versetzt.

5. Messeinrichtung nach Anspruch 4,
   **dadurch gekennzeichnet, dass**
   an jedem der weiteren Messabschnitte des weiteren Rohrs (200) jeweils ein weiterer Dehnungsmesssensor angeordnet ist, der zum Ausgeben eines weiteren Messignals ausgebildet ist, das eine Dehnung des jeweiligen weiteren Messabschnitts des weiteren Rohrs (200) charakterisiert, wobei der Schwingungsgeber (4), das weitere Rohr (200) und die weiteren Dehnungsmesssensoren (31, 32) dergestalt zueinander korrespondierend ausgebildet sind, dass in dem schwingenden Zustand des weiteren Rohrs (200) das von den weiteren Dehnungsmesssensoren (31, 32) jeweils ausgegebene weitere Messignal jeweils eine von der Schwingung abhängige Schwingungsfrequenz aufweist und dass mittels eines im schwingenden Zustand des weiteren Rohrs (200) erfolgenden Abgleichs der Messignale der beiden Dehnungsmesssensoren (31, 32), insbesondere mittels einer im schwingenden Zustand des weiteren Rohrs (200) durch den Fluidfluss erzeugten Phasenverschiebung zwischen den weiteren Messignalen der beiden weiteren Dehnungsmesssensoren (31, 32), der Massestrom eines weiteren Fluidflusses durch das Rohr (2) quantifizierbar ist.

6. Messeinrichtung nach einem der vorangehenden Ansprüche,
   **dadurch gekennzeichnet, dass**
   der Schwingungsgeber (4) dazu ausgebildet ist, das Rohr (2) im schwingenden Zustand in einer Richtung schwingen zu lassen, die zumindest eine Komponente senkrecht zu einer Achse aufweist, die als Winkelhalbierende der U-Form ausgebildet ist.

7. Messeinrichtung nach einem der vorangehenden Ansprüche,

**dadurch gekennzeichnet, dass**
der Schwingungsgeber (4) dazu ausgebildet ist, das Rohr (2) im schwingenden Zustand in einer Richtung schwingen zu lassen, die zumindest mit einer Komponente senkrecht auf einer Ebene steht, in der im Ruhezustand der Messeinrichtung die Rohrmittelpunkte des Rohrs (2) in den Messabschnitten liegen.

8. Messeinrichtung nach einem der vorangehenden Ansprüche,
**dadurch gekennzeichnet, dass**
die Dehnungsmesssensoren (31, 32) jeweils als Halbleiter-Dehnungsmesssensor, insbesondere als Si-Dehnungsmesssensor, ausgebildet sind, wobei insbesondere die Dehnungsmesssensoren (31, 32) jeweils eine Dicke von weniger als 50 $\mu$m, insbesondere weniger als 40 $\mu$m und/oder eine flächige Erstreckung von weniger als 1 mm$^2$, insbesondere weniger als 0,5 mm$^2$ aufweisen.

9. Messeinrichtung nach einem der vorangehenden Ansprüche,
**dadurch gekennzeichnet, dass**
die Dehnungsmesssensoren (31, 32) durch Aufglasen mit dem jeweiligen Messabschnitt verbunden sind, wobei insbesondere eine elektrisch isolierende Glasschicht zwischen dem jeweiligen Dehnungsmesssensor (31, 32) und dem jeweiligen Messabschnitt (21, 22) vorgesehen ist.

10. Messeinrichtung nach einem der vorangehenden Ansprüche,
**dadurch gekennzeichnet, dass**
die Dehnungsmesssensoren (31, 32) jeweils eine Messfläche aufweisen, die sich in einer ersten Flächenrichtung und in einer zweiten, auf der ersten senkrecht stehenden Flächenrichtung erstreckt, wobei sie sich in jeder der Flächenrichtungen über mindestens 0,1 mm und weniger als 2 mm erstreckt und/oder einen Flächeninhalt von mindestens 0,1 mm$^2$, insbesondere mindestens 0,2 mm$^2$ aufweist, wobei die Dehnungsmesssensoren (31, 32) jeweils über ihre Messfläche hinweg starr mit dem jeweiligen Messabschnitt (21, 22) bzw. Körper verbunden sind, wobei innerhalb der Erstreckung der Messfläche entlang den Flächenrichtungen mindestens zwei Elektroden, insbesondere mindestens vier Elektroden an dem Dehnungsmesssensor (31, 32) angeordnet sind, über die ein Messsignal, das eine Dehnung des Dehnungsmesssensors (31, 32) in einer Messrichtung charakterisiert, auslesbar ist, wobei insbesondere die Elektroden miteinander als Vollbrücke verschaltet sind.

11. Messeinrichtung nach Anspruch 10,
**dadurch gekennzeichnet, dass**
die Dehnungsmesssensoren (31, 32) jeweils über ihre Messfläche hinweg stoffschlüssig mit dem jeweiligen Messabschnitt (21, 22) bzw. Körper verbunden sind, insbesondere durch eine anorganische Verbindung zwischen dem jeweiligen Dehnungsmesssensor (31 ,32) und dem jeweiligen Messabschnitt (21, 22) bzw. Körper.

12. Messeinrichtung nach einem der Ansprüche 10 oder 11,
**dadurch gekennzeichnet, dass**
an zumindest einigen der Dehnungsmesssensoren (31, 32) mindestens 2, insbesondere mindestens 4 Elektroden angeordnet sind, wobei aus den Elektroden ein Messsignal auslesbar ist, das sowohl von der Dehnung des Dehnungsmesssensors (31, 32) in Messrichtung als auch von einer Dehnung des Dehnungsmesssensors (31, 32) in einer senkrecht auf der Messrichtung stehenden Zusatzmessrichtung abhängt.

13. Messeinrichtung nach einem der vorangehenden Ansprüche,
**dadurch gekennzeichnet, dass**
die Dehnungsmesssensoren (31, 32) jeweils dazu ausgebildet sind, mit dem von ihnen jeweils ausgegebenen Messsignal eine Dehnung des jeweiligen Messabschnitts (21, 22) des Rohrs (2) entlang einer Dehnungsrichtung zu charakterisieren, wobei die Dehnungsrichtung zumindest mit einer Komponente senkrecht zu einer Anregungsrichtung verläuft, in der der Schwingungsgeber (4) das Rohr (2) zum Anregen der Schwingung bewegt.

14. Messsystem umfassend eine Messeinrichtung nach einem der vorangehenden Ansprüche sowie eine Datenverarbeitungseinrichtung (5),
**dadurch gekennzeichnet, dass**
die Datenverarbeitungseinrichtung (5) zum Ansteuern des Schwingungsgebers (4) und/oder zum Auslesen der Dehnungsmesssensoren (31, 32) und zum Ermitteln eines Werts für des Massestrom des Fluidflusses aus den von den Dehnungsmesssensoren (31, 32) ausgelesenen Messignalen ausgebildet ist.

15. Verfahren zum Ermitteln eines Massestroms eines Fluidflusses durch ein Rohr (2), wobei das Rohr (2) zwei Messabschnitte (21, 22) aufweist, die durch einen Zwischenabschnitt (20) des Rohrs (2) miteinander verbunden sind, und die Messabschnitte (21, 22) gemeinsam mit dem Zwischenabschnitt (20) eine U-Form ausbilden, wobei zur Erzeugung des Fluidflusses ein Fluid durch das Rohr (2) geleitet wird und das Rohr (2) in eine Schwingung versetzt wird,
**dadurch gekennzeichnet, dass**
aus einem ersten Dehnungsmesssensor (31, 32), der an einem ersten der Messabschnitte (21, 22) des Rohrs (2) befestigt ist, ein erstes Messsignal ausgelesen wird, das eine erste Dehnung des ersten Messabschnitts (21, 22) während der Schwingung quantifiziert, und aus einem zweiten Dehnungsmesssensor (31, 32), der an einem zweiten der Messabschnitte (21, 22) des Rohrs (2) befestigt ist, ein zweites Messsignal ausgelesen wird, das eine zweite Dehnung des zweiten Messabschnitts (21, 22) während der Schwingung quantifiziert, wobei der Massestrom durch einen Abgleich des ersten Messsignals mit dem zweiten Messsignal ermittelt wird, wobei insbesondere eine während der Schwingung auftretende Phasenverschiebung zwischen dem ersten und dem zweiten Messsignal ermittelt wird und mittels der Phasenverschiebung der Massestrom ermittelt wird.

**Fig. 1a**

**Fig. 1b**

**Fig. 2**

**Fig. 3**

Europäisches
Patentamt

European
Patent Office

Office européen
des brevets

**EUROPÄISCHER RECHERCHENBERICHT**

**Nummer der Anmeldung**

EP 24 19 8522

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2019/034897 A2 (UNIV COVENTRY [GB]) 21. Februar 2019 (2019-02-21) * Abbildungen 1a-c,8 * * Seite 13, Zeile 8 - Zeile 9 * * Ansprüche 1-2 * ----- | 1,15 | INV. G01F1/84 |
| X | US 7 380 439 B2 (CIDRA CORP [US]) 3. Juni 2008 (2008-06-03) * Abbildung 25 * * Ansprüche 1-2 * * Spalte 21, Zeile 61 - Zeile 66 * ----- | 1-3,11, 15 | |
| X | US 10 539 442 B2 (MICRO MOTION INC [US]) 21. Januar 2020 (2020-01-21) * Abbildungen 2,8,10 * * Anspruch 1 * * Spalte 10, Zeile 38 - Zeile 63 * * Spalte 11, Zeile 29 - Zeile 52 * ----- | 1,4-10, 12-15 | |
| A | US 2022/107215 A1 (GROENESTEIJN JARNO [NL] ET AL) 7. April 2022 (2022-04-07) * Absatz [0049] - Absatz [0050] * ----- | 8,12,13 | RECHERCHIERTE SACHGEBIETE (IPC) |
| A | US 5 497 665 A (CAGE DONALD R [US] ET AL) 12. März 1996 (1996-03-12) * Spalte 7, Zeile 54 - Spalte 8, Zeile 7 * ----- | 9 | G01F G01N G01L |
| A | US 9 976 890 B2 (MICRO MOTION INC [US]) 22. Mai 2018 (2018-05-22) * Abbildung 4 * * Anspruch 45 * ----- | 10 | |

Der vorliegende Recherchenbericht wurde für alle Patentansprüche erstellt

| Recherchenort | Abschlußdatum der Recherche | Prüfer |
|---|---|---|
| Den Haag | 15. Januar 2025 | Rambaud, Patrick |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 19 8522

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2025

| Im Recherchenbericht angeführtes Patentdokument | Datum der Veröffentlichung | Mitglied(er) der Patentfamilie | Datum der Veröffentlichung |
|---|---|---|---|
| WO 2019034897 A2 | 21-02-2019 | KEINE | |
| US 7380439 B2 | 03-06-2008 | AT E414261 T1 | 15-11-2008 |
| | | CA 2532592 A1 | 03-02-2005 |
| | | EP 1646849 A2 | 19-04-2006 |
| | | MX PA06000598 A | 19-04-2006 |
| | | NO 338720 B1 | 10-10-2016 |
| | | US 2005044929 A1 | 03-03-2005 |
| | | US 2007125154 A1 | 07-06-2007 |
| | | WO 2005010470 A2 | 03-02-2005 |
| US 10539442 B2 | 21-01-2020 | AR 101017 A1 | 16-11-2016 |
| | | CN 106461430 A | 22-02-2017 |
| | | EP 3164679 A1 | 10-05-2017 |
| | | JP 6279109 B2 | 14-02-2018 |
| | | JP 2017525947 A | 07-09-2017 |
| | | US 2017115142 A1 | 27-04-2017 |
| | | WO 2016003447 A1 | 07-01-2016 |
| US 2022107215 A1 | 07-04-2022 | EP 3914881 A1 | 01-12-2021 |
| | | US 2022107215 A1 | 07-04-2022 |
| | | WO 2020153835 A1 | 30-07-2020 |
| US 5497665 A | 12-03-1996 | AU 680140 B2 | 17-07-1997 |
| | | AU 683752 B2 | 20-11-1997 |
| | | CA 2186342 A1 | 02-11-1995 |
| | | CA 2186343 A1 | 02-11-1995 |
| | | DE 69505808 T2 | 01-04-1999 |
| | | DE 69531046 T2 | 06-05-2004 |
| | | DE 69531363 T2 | 03-06-2004 |
| | | EP 0757782 A1 | 12-02-1997 |
| | | EP 0758443 A1 | 19-02-1997 |
| | | EP 0867694 A1 | 30-09-1998 |
| | | JP H09512340 A | 09-12-1997 |
| | | JP H09512341 A | 09-12-1997 |
| | | US 5473949 A | 12-12-1995 |
| | | US 5497665 A | 12-03-1996 |
| | | WO 9529385 A1 | 02-11-1995 |
| | | WO 9529386 A1 | 02-11-1995 |
| US 9976890 B2 | 22-05-2018 | AR 099957 A1 | 31-08-2016 |
| | | CN 106461443 A | 22-02-2017 |
| | | EP 3129755 A1 | 15-02-2017 |
| | | JP 6303025 B2 | 28-03-2018 |
| | | JP 2017514121 A | 01-06-2017 |
| | | US 2017082473 A1 | 23-03-2017 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT
ÜBER DIE EUROPÄISCHE PATENTANMELDUNG NR.**

EP 24 19 8522

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2025

| Im Recherchenbericht angeführtes Patentdokument | Datum der Veröffentlichung | Mitglied(er) der Patentfamilie | Datum der Veröffentlichung |
|---|---|---|---|
| | | WO 2015156763 A1 | 15-10-2015 |

Für nähere Einzelheiten zu diesem Anhang : siehe Amtsblatt des Europäischen Patentamts, Nr.12/82

EPO FORM P0461

Seite 2 von 2